# EUROPEAN PATENT SPECIFICATION

(11) **EP 2 466 815 B1**
(45) Date of publication and mention of the grant of the patent: **10.04.2019**
(21) Application number: 10816621.6
(22) Date of filing: 29.06.2010
(51) Int. Cl.: H04L 12/751

(54) **METHOD AND SYSTEM FOR INITIATING FORWARDING OF COMMUNICAITON, INFORMATION AND DATA MESSAGE AND FOR ROUTING CONFIGURATION**
VERFAHREN UND SYSTEM ZUR INITIIERUNG DER WEITERLEITUNG VON KOMMUNIKATIONEN, INFORMATIONEN UND DATENNACHRICHTEN SOWIE ZUR ROUTING-KONFIGURATION
PROCÉDÉ ET SYSTÈME DE DÉCLENCHEMENT D'ACHEMINEMENT DE MESSAGE DE COMMUNICATION, D'INFORMATIONS ET DE DONNÉES ET DE CONFIGURATION DE ROUTAGE

(30) Priority: 17.09.2009 CN 200910174295
(43) Date of publication of application: 20.06.2012
(73) Proprietor: ZTE Corporation, Shenzhen, Guangdong 518057 (CN)
(72) Inventor: WU, Qiang, Shenzhen Guangdong 518057 (CN); HUANG, Bing, Shenzhen Guangdong 518057 (CN); FU, Tao, Shenzhen Guangdong 518057 (CN)
(74) Representative: Manitz Finsterwald Patent- und Rechtsanwaltspartnerschaft mbB
(86) International application number: PCT/CN2010/074736
(87) International publication number: WO 2011/032417

(56) References cited:
- CN-A- 101 136 866
- CN-A- 101 459 698
- US-B1- 6 459 700
- FARINACCI V FULLER D MEYER D LEWIS CISCO D: "LISP Alternative Topology (LISP+ALT); draft-fuller-lisp-alt-05.txt", LISP ALTERNATIVE TOPOLOGY (LISP+ALT); DRAFT-FULLER-LISP-ALT-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 5, 24 February 2009 (2009-02-24), XP015060585,
- FARINACCI V FULLER D MEYER D LEWIS CISCO SYSTEMS D: "Locator/ID Separation Protocol (LISP); draft-ietf-lisp-04.txt", LOCATOR/ID SEPARATION PROTOCOL (LISP); DRAFT-IETF-LISP-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. lisp, no. 4, 16 September 2009 (2009-09-16), XP015064195, [retrieved on 2009-09-16]
- DAMIAN LEZAMA ET AL: "Implementation of LISP evaluation tools", NETWORK OPERATIONS AND MANAGEMENT SYMPOSIUM, 2009. LANOMS 2009. LATIN AMERICAN, IEEE, PISCATAWAY, NJ, USA, 19 October 2009 (2009-10-19), pages 1-4, XP031570169, ISBN: 978-1-4244-4551-6
- TU RUI ET AL: "Network Access Control Mechanism Based on Locator/Identifier Split", NETWORKING, ARCHITECTURE, AND STORAGE, 2009. NAS 2009. IEEE INTERNATIONAL CONFERENCE ON, IEEE, PISCATAWAY, NJ, USA, 9 July 2009 (2009-07-09), pages 171-174, XP031505400, ISBN: 978-0-7695-3741-2
- KYE-HWAN LEE ET AL: "Hierarchical mapping information distribution system for ID/Loc separation for scalable addressing and routing", INTEGRATED NETWORK MANAGEMENT-WORKSHOPS, 2009. IM '09. IFIP/IEEE INTERNATIONAL SYMPOSIUM ON, IEEE, PISCATAWAY, NJ, USA, 1 June 2009 (2009-06-01), pages 249-252, XP031504406, ISBN: 978-1-4244-3923-2
- BRIM N CHIAPPA D FARINACCI V FULLER D LEWIS D MEYER S: "LISP-CONS: A Content distribution Overlay Network Service for LISP; draft-meyer-lisp-cons-04.txt", 20080409, no. 4, 9 April 2008 (2008-04-09), XP015056740, ISSN: 0000-0004

## Description

### Technical Field

The present invention relates to the field of communication technology, and in particular, to a method and system for initiating communication, forwarding information/data message and routing configuration in locator identifier separation architecture.

### Background of the Related Art

The IP address in Transmission Control Protocol/Internet Protocol (TCP/IP) widely used in the exiting Internet has dual functions, which is not only used as a location identifier of a network interface of a communication terminal host of a network layer in a network topology, but also is used as an identification identifier of the network interface of the host at a transport layer. In early design of the TCP/IP protocol, the condition of host mobility is not considered. However, when the host mobility is increasingly common, the defect of semantic overload of the IP address is increasingly evident. When the IP address of the host is changed, not only the route changes, but also the identification identifier of the communication terminal host changes, which will lead to a increasingly heavy routing load, and the change of the IP address of the host will cause an interrupt of applications and connections.

The purpose for presenting the identification identifier and location separation problem is to solve problems such as the semantic overload of the IP address and a serious routing load etc., separate the dual functions of the IP address, implement supporting for problems such as mobility, multi home-ness, IP address dynamical re-allocation, reduction of routing load, and interacts between different network areas in the next generation Internet, and so on..

In the related art, a network router based implementation method is one of schemes for the identification identifier and location separation problem. When a Mobile Node (MN for short) initiates communication to a Correspondent Node (CN for short), an Access Service Node (ASN for short) of the MN initiates a location inquiring process to an Identity Location Register (ILR for short) of the present domain. Current location information of a destination terminal is obtained with the cooperation of the ILR of the present domain, an ILR of a home domain of the destination terminal and an ILR of a domain where the destination terminal is located currently, and is then returned to the ASN, thus ensuring the ASN can initiate a communication connection correctly.

The above schemes based on the network router primarily have the following problems.

First. The trigger condition for a source ASN to initiate a location inquiring process is that the MN initiates communication, and in the process of the MN initiating the communication, the source ASN is required to perform a CN location inquiring process. At this time, the source ASN does not have mapping information between the location identifier (Routing-Location Identifier, RID for short) and the identification identifier (Access Identifier, AID for short) of the CN, and can not forward a data message according to the routing information treating the RID of the correspondent node as an identifier. Based on different network transport conditions and network element locations, the CN location inquiring process initiated by the source ASN may last for several hundred milliseconds to a few seconds, and the related art does not explicitly define how to deal with the data message transmitted by the MN to the CN during the inquiring.

Second. Routers or access gateway devices of existing Internet perform a longest match according to entries of a routing table when forwarding a data message, and perform the forwarding after searching out a forwarding route. There are generally a large number of messages of which the service can not be realized by the routing in the network, for example, a condition that there is no CN etc. In addition, considering requirements on saving network processing capability, there will be a condition when a border router is not configured with a default route. Corresponding to this scene, there are also a large number of unreachable messages under network based identification location separation architecture. The related art also does not explicitly define how to deal with these messages.

In addition, the existing identification identifier and location separation based protocol (Locator Identifier Separation Protocol (LISP)) technology is a network-based identification identifier and location separation solution. However, the solution does not explicitly define the process how to initial communication by the MN in a roaming scene. Based on currently available solutions, if the mobility of the terminal is considered, a problem that a Border Gateway Protocol (BGP) routing table is too large will occur.

The features of the preamble of the independent claims are known from the document "LISP Alternative Topology (LISP+ALT); draft-fuller-lisp-alt-05.txt" of FARINACCI V FULLER D MEYER D LEWIS CISCO D, IETF; STANDARDWORKINGDRAFT, ISOC 4, RUE DES FALAISES CH- 1205 GENEVA, SWITZERLAND, no. 5, 24 February 2009, XP015060585. Related technologies are also known from the document "Network Access Control Mechanism Based on Locator/Identifier Split" of TU RUI ET AL, NETWORKING, ARCHITECTURE, AND STORAGE, 2009. NAS 2009. IEEE INTERNATIONAL CONFERENCE ON, IEEE, PISCATAWAY, NJ, USA, 9 July 2009, XP031505400, ISBN: 978-0-7695-3741-2.

### Summary of the Invention

One technical problem to be solved by the present invention is to provide a method for forwarding a data message in a process of initiating communication as defined in the independent claims, so as to implement the forwarding of the data message by an ASN in the process of initiating the communication.

The invention is defined by the subject-matter of the independent claims.

Compared with the related art, the technical scheme of the present invention has the following beneficial effects.

The routing of the data message in the process of initiating communication when the mobile node initiates the communication is implemented by expanding a packet forwarding functional entity in the existing ILR.

In the network based identification identifier and location separation architecture, the mobile node is supported to initiate communication to the CN in the roaming application scene is supported.

With the method for routing forwarding the data message described above, the problem that service of message can not be realized by the routing in existing routing forwarding method can be solved.

### Brief Description of Drawings

Fig. 1 is a schematic diagram of a network topology based on identification identifier and location separation architecture according to the present invention.
Fig. 2 is a schematic diagram of related interfaces based on identification identifier and location separation architecture according to an example of the present invention.
Fig. 3 is a schematic flow chart of a terminal initiating communication according to an example of the present invention.
Fig. 4 is a schematic flow chart of a terminal registering to an ILR and updating a location according to an example of the present invention.
Fig. 5 is a schematic diagram of a topology of a mapping forwarding plane according to an example of the present invention.
Fig. 6 is a schematic diagram of a signaling route for a terminal to inquire mapping information of a CN according to an example of the present invention.

### Preferred Embodiments of the Present Invention

The present invention will be further illustrated in detail in conjunction with accompanying drawings and examples hereinafter.

The basic idea of the identification identifier and location separation architecture is to divide the network into an access layer and a core layer, allocate a unique user identification identifier to each user in the network, which always remains the same in the process of moving. There are two types of identifiers in the network, i.e., the user Access Identifier (AID) and the Routing-Location Identifier (RID). Wherein, the AID is a unique AID allocated to each user in the network, can only be used in the access layer, and always remains the same when the user terminal moves. The AID is used to identify the opposite end for user terminals, which can communicate based on the AID of the correspondent node. The RID is a location identifier allocated to the user terminal, and can only be used in the core layer.

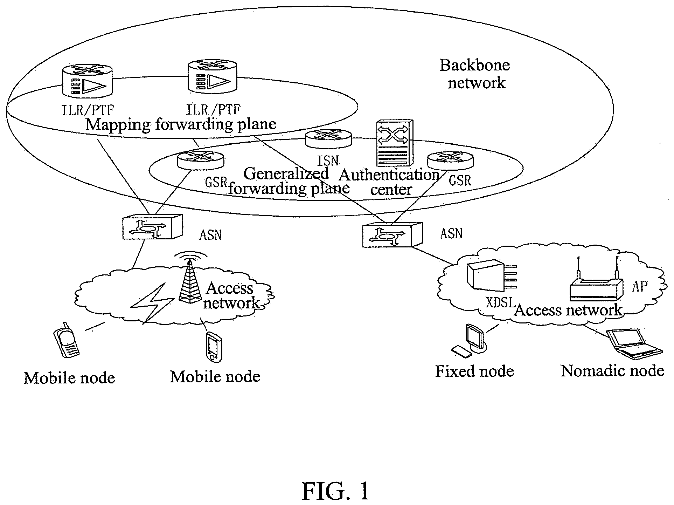

The specific network topology of the identification identifier and location separation based architecture according to the present example is shown in Fig. 1. The network is divided into an access network and a backbone network in the architecture, and the backbone network is further divided into two functional planes which are logically independent with each other, i.e., a mapping forwarding plane and a generalized forwarding plane. The access network is located at the edge of the backbone network, and is responsible for accesses of all terminals. The backbone network is responsible for the routing and forwarding of a data message between the terminals which access via the access network. The access service node (ASN) is located at a boundary point of the backbone network and the access network, and has interfaces to the access network and the backbone network. The access network and the backbone network do not overlap in the topology relationship.

In the architecture, the user terminal which accesses can be one or more of a mobile node, a fixed node and a nomadic node.

The access network is configured to provide 2 layer (a physical layer and a link layer) access service to the user terminal to maintain a physical access link between the user terminal and the ASN. The access network can be a base station system, such as a Base Station Subsystem (BSS), a Radio Access Network (RAN), an evolved Node B (eNodeB) and so on, or can also be a Digital Subscriber Line (xDSL), an Access Point (AP) and so on.

The ASN is primarily configured to provide an access service to the user terminal, maintain a connection between the terminal and the backbone network, and forward user data.

The generalized forwarding plane is primarily configured to route and forward a data message according to the RID in the data message.

The mapping forwarding plane is primarily configured to store mapping information between the AID and the RID (i.e., RID-AID mapping information) of the user terminal, deal with a registration procedure of the user terminal, deal with a location inquiring procedure of the user terminal, and route and forward a data message treating the AID as a destination address.

The primary network elements and functional entities involved in Fig. 1 are as follows.

An ASN is configured to maintain a connection relationship between a user terminal and a backbone network, allocate a RID to the terminal, deal with a switching procedure, deal with a registration procedure, deal with an accounting and authentication procedure, and maintain and inquire AID-RID mapping information of the CN.

Specifically, the ASN is further configured to encapsulate, route and forward the data message transmitted to the terminal or transmitted by the terminal.

After receiving the data message transmitted by the terminal, the ASN inquires the AID-RID mapping table in a local cache according to the destination address in the data message (i.e., the AID of the CN), if the corresponding AID-RID mapping entry is searched out, the ASN encapsulates the searched RID of the CN in the message header and forwards to the generalized forwarding plane; and if the corresponding AID-RID mapping entry is not searched out, the ASN forwards the data message to the mapping forwarding plane, and initiates the procedure of inquiring the AID-RID mapping information (of the CN) to the mapping forwarding plane.

After receiving the data message transmitted to the terminal, the ASN de-encapsulates the data message, strips the newly added message header including the RID in the data message, and transmits to the terminal.

A General Switch Router (GSR) is located in the generalized forwarding plane of the backbone network, and is primarily configured to route and forward data messages treating the RIDs as source addresses and destination addresses.

An authentication center, which is responsible for recording user attributes including information such as user types, authentication information and user service levels etc. in the architecture network, generating user security information for authentication, integrity protection and encryption, and performing legality authentication and authorization on the user when the user access. The authentication center supports bidirectional authentication between the network and the user.

An Identity Location Register/Packet Transfer Function (ILR/PTF), which can be two functional modules on the same entity, is located in the mapping forwarding plane of the backbone network.

The ILR, which is an identity location register, is configured to store and maintain the AID-RID mapping information of users in the architecture network, implement the registration function, and deal with the location inquiring procedure of the CN.

The PTF is a packet transfer function. After the mapping forwarding plane receives the data message transmitted by the ASN, the data message is routed and forwarded in the mapping forwarding plane by the PTF according to destination AID. Specifically, after the PTF node in the mapping forwarding plane searches out the destination AID-RID mapping information, the PTF node encapsulates the corresponding RID information in the data message header and forwards to the GSR of the generalized forwarding plane, and the GSR routes and forwards to the ASN where the destination terminal is located.

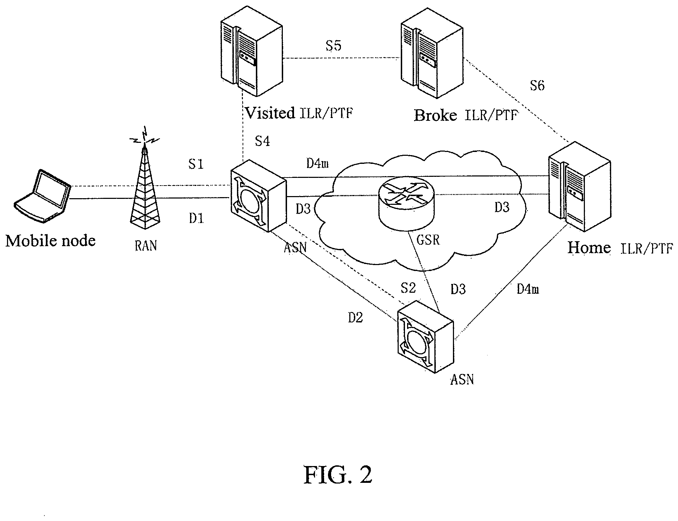

The related interfaces of the above network-based identification identifier and location separation architecture are shown in Fig. 2. The primary interfaces include the following interfaces.

S1/D1 is a control signaling/user data interface between the terminal and the ASN. S1 is a signaling interface between the terminal and the ASN, and is primarily used for dealing with message procedures of access management, switching, authentication, accounting and registration. D1 is an interface for forwarding and receiving data between the terminal and the ASN.

For the terminal compatible with the present architecture network, the data message format of the D1 interface is as follows:

| | | | |
|---|---|---|---|
| 2 layer message header | Source AID | Destination AID | Data message payload... |

S2/D2 is an interface between the ASNs, and is primarily used for switching management and data forwarding during a switch. S2 is primarily used for transferring of switching management signaling during the switch and transferring of a RID update message when a location between the CNs is changed. D2 is primarily used for data forwarding between the ASNs during the switch.

D3 is an external interface of the generalized forwarding plane (including an interface between the ASN and the GSR and an interface between the ILR/PTF and the GSR). The data message format of the D3 interface is as follows:

| | | | | | |
|---|---|---|---|---|---|
| 2 layer message header | Source RID | Destination RID | Source AID | Destination AID | Data message payload... |

S4 is a signaling interface between the ASN and the mapping forwarding plane, and is primarily used to inquire and maintain the AID-RID mapping information.

D4m is a data forwarding interface between the ASN and the mapping forwarding plane. The data message format of the D4m interface is as follows:

| | | | | | |
|---|---|---|---|---|---|
| 2 layer message header | Source RID | RIDi | Source AID | Destination AID | Data message payload... |

Wherein, the source RID corresponds to the source AID, the RIDi is a routing address of the ILR/PTF in the mapping forwarding plane connected to the ASN, and the routing address is configured for the ASN by the system.

S5 is an interface between the ILRs/PTFs in the mapping forwarding plane, and is primarily used to inquire and maintain the AID-RID mapping information, and interact the routing information. Wherein, when there is no direct connection relationship between the visited ILR and the home ILR, the broke ILR forwards signaling between the visited ILR and the home ILR.

Wherein, the ILR deals with the signaling of the control plane, and the PTF deals with the data message of the media plane. The signaling of the S4 interface may be routed to the home ILR only if it is through the visited ILR and broke ILR. The forwarding path of the data message of the D4m interface may also be routed to the home ILR only if it is through the visited ILR and the broke ILR. In Fig. 2, the D4m interface is from the ASN to the home ILR/PTF directly, which is only an example and is not intended to define the routing path of the data message forwarded by the PTF according to the present invention.

The processing of the terminal initiating communication will be described hereinafter. In order to make the presentation more clear, the communication between a MN and a terminal CN has been taken for instance to describe, and the terminal CN and the terminal MN are correspondent nodes of each other.

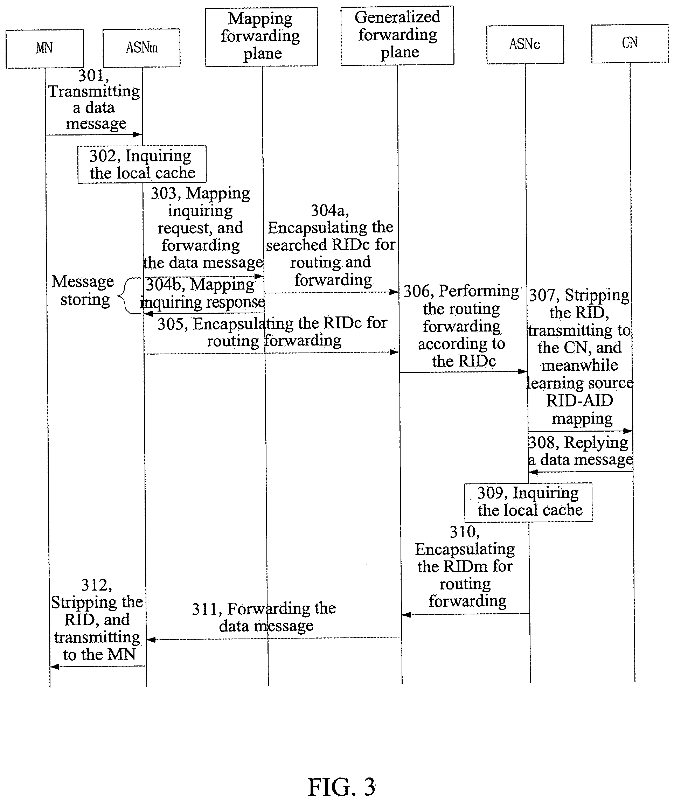

As shown in Fig. 3, the process of the MN initiating communication to the CN and establishing communication with the CN includes the following steps.

In step 301, the ASN initiates communication to the CN through the ASN where the MN is located (denoted as ASNm herein), and the source address in the transmitted data message is AIDm, and the destination address is the AID of the CN (denoted as AIDc herein).

In step 302, after receiving the data message (the message format is the format defined by the D1 interface) transmitted by the MN, the ASNm inquires the AID-RID mapping information in the local cache according to the AIDc in the data message, and if the corresponding AIDc-RIDc mapping information is searched out, step 305 is performed; otherwise, step 303 is performed.

In step 303, if the AIDc-RIDc mapping information is not searched out in the mapping information of the local cache, the ASNm transforms the format of the data message from the format defined by the D1 interface into the format defined by the D4m interface (i.e., treating the RIDm to which the AIDm corresponds as a source address, and treating the routing identifier RIDi of the ILR in the mapping forwarding plane connected to the ASN as a destination address, both of which are encapsulated in the newly added message header), forwards the data message to the mapping forwarding plane and transmits an inquiring request for the AIDc-RIDc mapping information to the mapping forwarding plane.

In step 304a, after receiving the data message transmitted by the ASNm, the mapping forwarding plane inquires the AIDc-RIDc mapping information, encapsulates the RIDc in the message header (for example, adding RIDc routing information in the data message), and transforms the format of the data message from the format of the D4m interface to the format of the D3 interface (i.e., replacing the RIDi in the newly added message header with the RIDc), and forwards the data message to the generalized forwarding plane.

In step 304b, the mapping forwarding plane returns the searched AIDc-RIDc mapping information to the ASNm through a mapping inquiring response message.

After receiving the response, the ASN stores the AIDc-RIDc mapping information in the response in the local cache.

In step 305, if the AIDc-RIDc mapping information is searched out in the mapping information of the local cache by the ASNm, the ASNm transforms the format of the data message from the format defined by the D1 interface into the format defined by the D3 interface (i.e., treating the RIDm to which the AIDm corresponds as a source address, and treating the RIDc as a destination address, both of which are encapsulated in the newly added message header), and forwards the data message to the generalized forwarding plane.

In step 306, the generalized forwarding plane transmits the data message to the ASN where the CN is located (denoted as ASNc herein).

In step 307, after receiving the data message transmitted to the terminal CN, the ASNc de-encapsulates the data message, strips the newly added message header from the data message, transforms the format of the data message from the format defined by the D3 interface into the format defined by the D1 interface, and then transmits the data message to the terminal CN.

Meanwhile, the ASNc learns the source RID-AID mapping information in the data message, i.e., after receiving the data message transmitted to the CN, the ASNc inquires the mapping information in the local cache, and if the RID-AID mapping information of the MN has not stored in the local cache, the ASNc locally stores the mapping information of the MN according to the RID and the AID of the MN in the data message. Thus, when receiving the data message replied from the CN, the ASNc inquires the mapping information, encapsulates the searched RIDm in the replied data message and forwards the data message to the generalized forwarding plane for forwarding.

In step 308, the CN replies a data message to the MN, wherein, the source address is AIDc, and the destination address is AIDm.

For the terminal CN, the terminal MN is a correspondent node, and the processing mode of transmitting a data message from the terminal CN to the terminal MN is the same.

In step 309, after receiving the data message replied from the CN, the ASNc inquires the AIDm-RIDm mapping information in the local cache according to the AIDm in the data message.

In step 310, after searching out the AIDm-RIDm mapping, the ASNc encapsulates the RIDm in the data message and transmits the data message to the generalized forwarding plane.

In step 311, the generalized forwarding plane transmits the data message to the ASNm.

In step 312, the ASNm de-encapsulates the data message, strips the newly added message header from the data message, and then transmits the data message to the MN.

In the procedure described above, the forwarding of the data message is implemented by the GSR in the generalized forwarding plane. In the condition that the corresponding AIDc-RIDc mapping entry is not searched out, the ASN transmits an inquiring request for the AIDc-RIDc mapping information to the ILR of the user home location on the mapping forwarding plane, and the AIDc-RIDc mapping information is returned by the ILR; and the data message is transmitted to the PTF of the user home location on the mapping forwarding plane, and the format transforming and forwarding of the data message is implemented by the PTF. Specifically, the ASN firstly transmits the inquiring request to the visited ILR connected therewith, and when the visited ILR and the home ILR are not the same ILR, the visited ILR forwards massages between the ASN and the home ILR, and when there is no direct connection between the visited ILR and the home ILR, a relay by the broke ILR is further required. Similarly, the ASN firstly transmits the data message to the visited PTF connected therewith, and when the visited PTF and the home PTF are not the same PTF, the visited PTF forwards massages between the ASN and the home PTF, and when there is no direct connection between the visited PTF and the home PTF, a relay by the broke PTF is further required.

In another example of the present invention, the ASN can also inquire the AIDc-RIDc mapping information only from the mapping forwarding plane, cache the received data message, transform the format of the cached data message from the format defined by the D1 interface into the format defined by the D3 interface after searching out the AIDc-RIDc mapping information, and forward the data message to the generalized forwarding plane.

In another example of the present invention, the ASN can also use another mode to re-encapsulate the received data message to be transmitted to the CN, i.e., replacing the source address AIDm in the message header with the RIDm, replacing the destination address AIDc with the RIDc, and encapsulating the AIDm and the AIDc in the payload of the data message. Accordingly, when receiving the data message to be transmitted to the terminal MN, the ASN needs to take out the AIDm and the AIDc from the payload of the data message, replaces the source address RIDm in the message header with the AIDm, replaces the destination address RIDc with the AIDc, i.e., recovering the format to be that defined by the D1 interface, and then transmits the data message to the terminal MN.

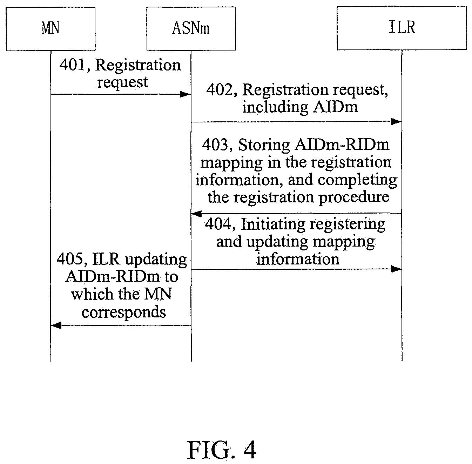

The above description is a procedure for forwarding a data message when the communication is initiated. The procedure of registration and location update of a terminal is described below taking also MN as an example. As shown in Fig. 4, the procedure comprises the following steps.

In step 401, when the MN is started, the registration procedure is initiated through an ASNm.

In step 402, the ASNm initiates a registration request including an AIDm to an ILR in a mapping forwarding plane.

In step 403, the ILR processes the registration request of the MN, and stores AIDm-RIDm mapping information in registration information.

In step 404, hereafter, the AID-RID mapping information of the MN changes with the change of the location due to the mobility of the MN; and when the location of the MN is changed, a procedure of registering and updating mapping information is initiated to the mapping forwarding plane through the ASNm.

In step 405, after allocating a new RID to the MN, the ASNm initiates an update message carrying the AID and the new RID of the MN to the ILR.

In step 405, after receiving the update message, the ILR updates an AIDm-RIDm entry to which the MN corresponds, for being inquired by the ASN where the CN is located in subsequent communication processes.

Thus, the ILR stores real-time AID-RID mapping information of all terminals in the network.

In addition, the embodiment of the present invention further provides a method of forwarding information and an access node applying the forwarding method, wherein, the forwarding method is applied to an identification identifier and location separation network comprising at least an access network and a backbone network, wherein, the backbone network comprises at least a mapping forwarding plane and a generalized forwarding plane, the method comprises:
receiving information transmitted from a first node to a second node via the access network, wherein, the information comprises at least an AID of the second node; and
inquiring a Routing-Location Identifier (RID) of the second node according to the AID of the second node, and when the RID of the second node is not searched out, initiating a RID inquiring request of the second node to the mapping forwarding plane and forwarding the information to the mapping forwarding plane so that the mapping forwarding plane inquires the RID of the second node based on the AID of the second node, and transmitting the information to the second node via the generalized forwarding plane based on the RID of the second node.

The example of the present invention further provides a method of forwarding information and an access node applying the forwarding method, wherein, the forwarding method is applied to an identification identifier and location separation network comprising at least an access network and a backbone network, wherein, the backbone network comprises at least a mapping forwarding plane and a generalized forwarding plane, the method comprises:
receiving a Routing-Location Identifier (RID) inquiring request and first information transmitted from a first node to a second node from a first Access Service Node (ASN), wherein, the RID inquiring request contains at least an AID of the second node; and
inquiring the RID of the second node according to the AID of the second node, encapsulating the searched RID of the second node in the first information, and transmitting the first information to the generalized forwarding plane so that the generalized forwarding plane transmits the first information to the second node based on the RID of the second node.

The present invention further provides a method for forwarding information, which is applied to a network architecture comprising an access network and a backbone network, the method comprising:
a first access node receiving first information transmitted from a first node to a second node via the access network, wherein, the first information comprises at least an Access Identifier (AID) of the second node;
the first access node inquiring a Routing-Location Identifier (RID) of the second node according to the AID of the second node, and when the RID of the second node is not searched out by the first access node at a first location, initiating a RID inquiring request of the second node to a second location, and obtaining the RID of the second node from the second location; and
when the first access node receives second information transmitted from the first node to the second node via the access network, the second information comprising at least the AID of the second node, the first access node searching out the RID of the second node obtained from the second location at the first location based on the AID of the second node, and transmitting the second information to the second node according to the RID of the second node.

Wherein, the second location is located outside the first access node or the second location is located in the backbone network.

In addition, the present invention further provides a method of routing configuration, comprising: dividing a network into a plurality of domains, and separating routing nodes in the network into in-domain nodes and inter-domain interconnection nodes, wherein,
each inter-domain interconnection node establishes, stores and maintains routing information of all domains, and forms an inter-domain routing table, wherein, contents stored in the inter-domain routing table are routing information of each domain; and
each in-domain node establishes, stores and maintains routing information of all users in the present domain, and forms an in-domain routing table, wherein, contents stored in the in-domain routing table are identifier information of each node in the present domain.

Further, after receiving a routing request, a home domain to which the routing destination address corresponds in the routing request is addressed by inquiring the inter-domain routing table.

Then, the home node to which the routing destination address corresponds is addressed in the home domain by inquiring the in-domain routing table of the home domain.

Wherein, the routing destination address includes home domain information and node identifier information.

When a new domain is added to the network, the inter-domain interconnection node of the newly added domain spreads the routing information thereof to all other inter-domain interconnection nodes, and the other inter-domain interconnection nodes store the routing information of the newly added domain in the inter-domain routing table.
when a new routing node is added to the network, the newly added routing node spreads the node identifier information thereof in the home domain thereof, and other in-domain nodes in the home domain thereof store the node identifier information in the in-domain routing table of the present domain.

Further, the routing and forwarding process of the routing request comprises the following steps.

After receiving the routing request, the inter-domain routing table is inquired according to the home domain information included in the routing destination address therein, and if the home domain to which the routing destination address corresponds is not the present domain, the routing request is forwarded to the corresponding home domain and the in-domain routing table of the corresponding home domain is then inquired; otherwise, the in-domain routing table of the present domain is inquired and the routing request is forwarded to the corresponding home node.

Wherein, the dividing of the domains is decided by an operation policy, and the network is divided into a plurality of domains according to operator networks, enterprise networks or countries and regions.

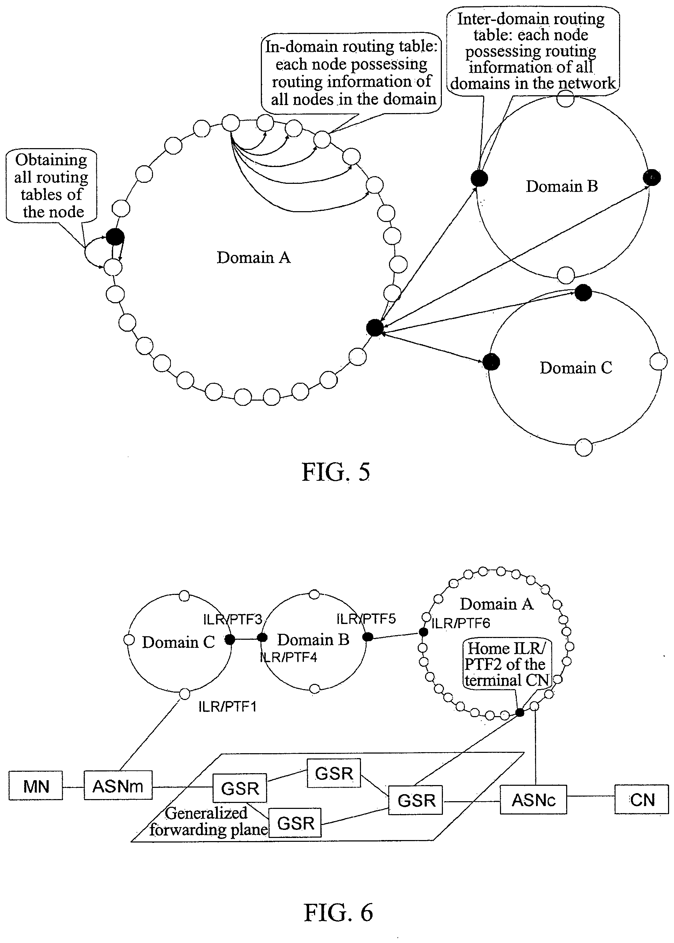

In addition, the present invention further provides a method of routing configuration in an identification identifier and location separation network. As shown in Fig. 5, the mapping forwarding plane is comprised of a plurality of domains, and there is a connection relationship between the domains. The setting of the mapping domains is decided by an operation policy. One mapping domain can be comprised of one operator network, or can also be comprised of one enterprise network, or can also be formed according to countries and regions. Various nodes comprising the mapping forwarding plane are ILRs/PTFs, and can be divided into in-domain ILR/PTF nodes and inter-domain interconnection ILR/PTF nodes. Wherein, each inter-domain interconnection ILR/PTF node establishes, stores and maintains routing information of all mapping domains, forms an inter-domain routing table, and the signaling or data message transmitted to the mapping forwarding plane by the terminal user can address the home domain of the terminal user by inquiring the inter-domain routing table; and each in-domain ILR/PTF node establishes, stores and maintains routing table information of all users in the present domain, forms an in-domain routing table, and the signaling or data message already transmitted to the home domain of the mapping forwarding plane by the terminal user can address the home ILR/PTF in the home domain of the terminal user by inquiring the in-domain routing table.

The mapping forwarding plane forms the inter-domain routing table and the in-domain routing table by data configuration or routing synchronization respectively, and specifically,
the routing information for inter-domain exchange needs to ensure that the message identified by the AID can be routed to the home domain, and the AID should include the home domain information (such as operator code etc.), the content stored in the entry of the inter-domain routing table is the home domain information included in the AID, the mapping forwarding plane is comprised of a plurality of domains, and the scale of the inter-domain routing table is equivalent to the number of the domains divided in the mapping forwarding plane;
the routing information fro in-domain exchange needs to ensure that the mapping entry can be uniquely hit by the AID, and the contents stored in the entries of the in-domain routing table are all AID identifier information (such as user codes) in the present domain, and the scale of the in-domain routing table is equivalent to the number of users dominated by the present domain.

The mapping forwarding plane makes the signaling such as the mapping inquiring request transmitted to the mapping forwarding plane and so on and the data message be able to be routed to the ILR/PTF (home ILR/PTF) node to which the destination terminal corresponds for processing by the dividing of the above plurality of domains and the configuration or synchronization of the routing information.

The operation mode of the mapping forwarding plane will be described by example of a terminal MN and a terminal CN hereinafter. The AID of the terminal CN is GID (home domain information) + LID (in-domain identifier information), wherein, the GID distinguishes different home domains, and the LID distinguishes different terminal users in the home domain. With respect to Fig. 6, the home domain of the terminal user CN is domain A, and the home ILR/PTF of the terminal user CN is ILR/PTF2. As shown in Fig. 5, there is a connection relationship between the mapping domain A, the mapping domain B, and the mapping domain C. When the mapping domain A is added to the network, the inter-domain interconnection ILR/PTF6 thereof will spread the GID to other interconnection ILR/PTFs of the mapping forwarding plane, and other interconnection ILR/PTFs will store the inter-domain routing information and form an inter-domain routing table.

The home ILR/PTF of the terminal CN is ILR/PTF2. After the CN opens an account at the ILR/PTF2, the ILR/PTF2 will spread the routing information LID of the CN in the mapping domain A, and other ILR/PTF nodes in the mapping domain A will store the routing information and form an in-domain routing table.

The routing process of a mapping forwarding plane will be further described below by example of a terminal MN inquiring an AIDc-RIDc mapping of a terminal CN in conjunction with Fig. 6.

The ASNm initiates a mapping inquiring message from the MN for inquiring the mapping of the CN to the mapping forwarding plane, and the destination address of the mapping inquiring message is the AID of the CN. After receiving the signaling or the data message, the ILR/PTF1 inquires an in-domain routing table of the present domain (mapping domain C), and if it is found that the CN is not the user terminal of the present domain, the ILR/PTF 1 forwards the signaling to inter-domain interconnection ILR/PTF3. The inter-domain interconnection ILR/PTF3 inquires the inter-domain routing table according to the GID of the CN, and if it is searched out that the route is directed to the ILR/PTF4, the ILR/PTF3 forwards the singling to the ILR/PTF4. After performing the same inquiring procedure as that of the ILR/PTF1, the ILR/PTF4 transmits the signaling to the inter-domain interconnection ILR/PTF6 of domain A through the ILR/PTF5. The ILR/PTF6 searches out that the CN is the user terminal of the present domain, and finally transmits the message to the ILR/PTF2 by inquiring the in-domain routing table.

The description above is the process of routing forwarding of the mapping inquiring request signaling in the mapping forwarding plane, and the routing mode of other signaling and data messages in the mapping forwarding plane has the same procedure as the process of the above signaling.

### Industrial Applicability

By the methods and systems for initiating communication, forwarding information and data message and routing configuration provided by the present invention, the routing of data message is realized in the process of initiating the communication, the MN is supported to initiate communication to the CN under the network based identification identifier and location separation architecture in a roaming application scene, and the problem that service of message can not be realized by the routing in the existing routing forwarding method can be solved.

## Claims

1. A method for forwarding a data message in a process of initiating communication, which is applied to an identification identifier and location separation network, the method comprising:
an Access Service Node, ASN, where a terminal is located receiving (302) the data message containing an access identifier, AID, of a correspondent node which is transmitted by the terminal, inquiring AID-RID mapping information in a local cache according to the AID of the correspondent node, if a Routing-Location Identifier, RID, corresponding to the AID of the correspondent node is not found, then the ASN where the terminal is located treating a RID to which an AID of the terminal corresponds as a source address and treating a routing identifier RIDi of an Identity Location Register, ILR, in a mapping forwarding plane connected to the ASN where the terminal is located as a destination address, wherein both addresses are encapsulated in a newly added message header, the ASN where the terminal is located forwarding the data message to the mapping forwarding plane and initiating a location inquiring process of the correspondent node to the mapping forwarding plane and meanwhile transmitting the data message to the mapping forwarding plane (303);
after receiving (304a) the data message, the mapping forwarding plane inquiring (304a) the RID corresponding to the AID of the correspondent node, encapsulating (304a) the RID corresponding to the AID of the correspondent node in the message header of the data message, replacing the RIDi in the newly added message header with the RID corresponding to the AID of the correspondent node and then forwarding (304a-306) the data message to an ASN where the correspondent node is located through a generalized forwarding plane; and
after receiving (307) the data message, the ASN where the correspondent node is located stripping (307) the RID from the data message and then transmitting (307) the data message to the correspondent node;
wherein when a location of the terminal is changed, a procedure of registering and updating mapping information is initiated to the mapping forwarding plane through the ASN where the terminal is located; after allocating a new RID to the terminal, the ASN where the terminal is located initiates an update message carrying the AID of the terminal and the new RID of the terminal to the ILR; after receiving the update message, the ILR updates an AID-RID entry to which the terminal corresponds;
wherein a backbone network is divided into the mapping forwarding plane and the generalized forwarding plane.

2. The method according to claim 1, wherein
the mapping forwarding plane is configured to store AID-RID mapping information of the correspondent node, deal with registration and inquiry of the correspondent node location, route and forward a data message which treats the AID as a destination address;
the generalized forwarding plane is configured to route and forward a data message which treats the RID as the destination address according to the RID in the data message which treats the RID as the destination address.

3. The method according to claim 1, wherein
the ASN where the terminal is located initiating (303) the location inquiring process of the correspondent node by transmitting a mapping inquiring request to the ILR in the mapping forwarding plane;
after receiving the mapping inquiring request, the ILR inquiring the RID corresponding to the AID of the correspondent node, and returning the RID to the ASN where the terminal is located;
the method further comprises: after receiving the RID corresponding to the AID of the correspondent node, the ASN where the terminal is located storing AID-RID mapping information of the correspondent node locally; then when receiving the data message transmitted by the terminal to the correspondent node, encapsulating the RID corresponding to the AID of the correspondent node in the data message according to the stored mapping information, and forwarding the data message to the ASN where the correspondent node is located through the generalized forwarding plane.

4. The method according to claim 3, wherein
when the ASN where the terminal is located does not search out the RID corresponding to the AID of the correspondent node locally, the ASN where the terminal is located transmitting the data message to a Packet Transfer Function, PTF, in the mapping forwarding plane; and
after receiving the data message, the PTF inquiring the RID corresponding to the AID of the correspondent node from the ILR, encapsulating the RID in the data message, and then forwarding the data message to the ASN where the correspondent node is located through the generalized forwarding plane.

5. The method according to claim 4, wherein
in the identification identifier and location separation network, the AID of the correspondent node includes home information;
the ASN where the terminal is located transmitting the mapping inquiring request to a current ILR of the terminal, and if the current ILR of the terminal is different from a home ILR of the correspondent node, the current ILR of the terminal routing the mapping inquiring request to the home ILR of the correspondent node according to the home information included in the AID of the correspondent node, and the home ILR of the correspondent node inquiring the RID corresponding to the AID of the correspondent node;
the ASN where the terminal is located transmitting the data message to the current PTF of the terminal, and if the current PTF of the terminal is different from the home PTF of the correspondent node, the current PTF of the terminal routing the data message to the home PTF of the correspondent node according to the home information included in the AID of the correspondent node, and the home PTF of the correspondent node inquiring the RID corresponding to the AID of the correspondent node from the home ILR of the correspondent node.

6. A system for forwarding a data message in a process of initiating communication, which is applied to an identification identifier and location separation network, the system comprising an Access Service Node, ASN, and a backbone network, wherein the backbone network is divided into a mapping forwarding plane and a generalized forwarding plane,
wherein the ASN is configured to: after receiving a first data message including an access identifier, AID, of a correspondent node transmitted by a terminal, inquire AID-RID mapping information in a local cache according to the AID of the correspondent node, if a Routing-Location Identifier, RID, corresponding to the AID of the correspondent node is not found, then treat a RID to which an AID of the terminal corresponds as a source address and treat a routing identifier RIDi of an Identity Location Register, ILR, in a mapping forwarding plane connected to the ASN as a destination address, wherein both addresses are encapsulated in a newly added message header, forward the first data message to the backbone network and initiate a location inquiring process of the correspondent node to the backbone network; and when receiving a second data message transmitted to the terminal, stripping an RID in the second data message from the second data message and transmitting the second data message to the terminal;
the mapping forwarding plane is configured to: after receiving the first data message, inquire the RID corresponding to the AID of the correspondent node and encapsulate the RID corresponding to the AID of the correspondent node in the message header of the first data message, replace the RIDi in the newly added message header with the RID corresponding to the AID of the correspondent node and then forward the first data message to the ASN where the correspondent node is located through the generalized forwarding plane;
wherein when a location of the terminal is changed, a procedure of registering and updating mapping information is initiated to the mapping forwarding plane through the ASN where the terminal is located; after allocating a new RID to the terminal, the ASN where the terminal is located initiates an update message carrying the AID of the terminal and the new RID of the terminal to the ILR; after receiving the update message, the ILR updates an AID-RID entry to which the terminal corresponds.

7. The system according to claim 6, wherein
the mapping forwarding plane is configured to store AID-RID mapping information of the correspondent node, deal with registration and inquiry of the correspondent node location, route and forward a data message which treats the AID as a destination address;
the generalized forwarding plane is configured to route and forward a data message which treats the RID as the destination address according to the RID in the data message which treats the RID as the destination address.

8. The system according to claim 6, wherein
the mapping forwarding plane comprises the ILR which is configured to store, update or delete AID-RID mapping information of the correspondent node; and after receiving the location inquiring request initiated by the terminal, return the RID corresponding to the AID of the correspondent node in the request to an inquiring party.

9. The system according to claim 6, wherein
the mapping forwarding plane further comprises a Packet Transfer Function, PTF, which is configured to: after receiving the first data message transmitted by the ASN, inquire the RID corresponding to the AID of the correspondent node from the ILR of the home domain of the correspondent node according to the AID of the correspondent node in the first data message, and treat the RID corresponding to the AID of the correspondent node as the destination address of the first data message, and transmit the first data message to the ASN where the correspondent node is located via the generalized forwarding plane.

10. The system according to claim 8 or 9, wherein
the mapping forwarding plane comprises a plurality of domains, and Identity Location Registers/Packet Transfer Functions, ILRs/PTFs, in the mapping forwarding plane are separated into in-domain nodes and inter-domain interconnection nodes, wherein
each inter-domain interconnection node is configured to establish, store and maintain routing information of all domains, and form an inter-domain routing table; wherein, contents stored in the inter-domain routing table are routing information of each domain;
each in-domain node is configured to establish, store and maintain routing information of all terminals in the present domain, and form an in-domain routing table; wherein, contents stored in the in-domain routing table are identifier information of each node in the present domain.

11. The system according to claim 10, wherein
the dividing of the domains in the mapping forwarding plane is decided by an operation policy, and the network is divided into a plurality of domains according to operator networks, enterprise networks or countries and regions.

## Patentansprüche

1. Verfahren zum Weiterleiten einer Datenbotschaft in einem Prozess zum Einleiten einer Kommunikation, welches auf ein Identification Identifier and Location Separation Network angewendet wird, wobei das Verfahren umfasst, dass:
ein Zugangsdienstknoten ASN, bei dem sich ein Endgerät befindet, die Datenbotschaft empfängt (302), die eine Zugangskennung AID eines Korrespondenzknotens enthält, welche von dem Endgerät übertragen wird, nach AID-RID-Zuordnungsinformationen in einem lokalen Cache gemäß der AID des Korrespondenzknotens fragt, dann, wenn keine Routing-Location Identifier RID, die der AID des Korrespondenzknotens entspricht, gefunden wird, der ASN, bei dem sich das Endgerät befindet, eine RID, welcher eine AID des Endgeräts entspricht, als eine Quellenadresse behandelt und eine Routing Identifier RIDi eines Identity Location Registers ILR in einer Zuordnungsweiterleitungsebene, die mit dem ASN verbunden ist, bei dem sich das Endgerät befindet, als eine Zieladresse behandelt, wobei beide Adressen in einen neu hinzugefügten Botschaftsheader eingeschlossen werden, wobei der ASN, bei dem sich das Endgerät befindet, die Datenbotschaft an die Zuordnungsweiterleitungsebene weiterleitet und einen Prozess zum Fragen nach dem Aufenthaltsort des Korrespondenzknotens an der Zuordnungsweiterleitungsebene einleitet und inzwischen die Datenbotschaft an die Zuordnungsweiterleitungsebene überträgt (303);
die Zuordnungsweiterleitungsebene nach Empfang (304a) der Datenbotschaft nach der RID fragt (304a), die der AID des Korrespondenzknotens entspricht, die RID, die der AID des Korrespondenzknotens entspricht, in den Botschaftsheader der Datenbotschaft einschließt (304a), die RIDi in dem neu hinzugefügten Botschaftsheader durch die RID ersetzt, die der AID des Korrespondenzknotens entspricht, und dann die Datenbotschaft durch eine verallgemeinerte Weiterleitungsebene an einen ASN weiterleitet (304a-306), bei dem sich der Korrespondenzknoten befindet; und
der ASN, bei dem sich der Korrespondenzknoten befindet, nach Empfangen der Datenbotschaft (307) die RID aus der Datenbotschaft entfernt (307) und dann die Datenbotschaft an den Korrespondenzknoten überträgt (307);
wobei, wenn ein Aufenthaltsort des Endgeräts geändert wird, eine Prozedur zum Registrieren und Aktualisieren von Zuordnungsinformationen an der Zuordnungsweiterleitungsebene durch den ASN, bei dem sich das Endgerät befindet, eingeleitet wird; der ASN, bei dem sich das Endgerät befindet, nach dem Zuteilen einer neuen RID für das Endgerät eine Aktualisierungsbotschaft an das ILR einleitet, welche die AID des Endgeräts und die neue RID des Endgeräts trägt; das ILR nach Empfang der Aktualisierungsbotschaft einen AID-RID-Eintrag, dem das Endgerät entspricht, aktualisiert;
wobei ein Backbone-Netzwerk in die Zuordnungsweiterleitungsebene und die verallgemeinerte Weiterleitungsebene unterteilt ist.

2. Verfahren nach Anspruch 1, wobei
die Zuordnungsweiterleitungsebene ausgestaltet ist, um AID-RID-Zuordnungsinformationen des Korrespondenzknotens zu speichern, um eine Registrierung und eine Frage nach dem Aufenthaltsort des Korrespondenzknotens zu erledigen, um eine Datenbotschaft zu lenken und weiterzuleiten, welche die AID als eine Zieladresse behandelt;
die verallgemeinerte Weiterleitungsebene ausgestaltet ist, um eine Datenbotschaft, welche die RID als die Zieladresse behandelt, in Übereinstimmung mit der RID in der Datenbotschaft, welche die RID als die Zieladresse behandelt, zu lenken und weiterzuleiten.

3. Verfahren nach Anspruch 1, wobei
der ASN, bei dem sich das Endgerät befindet, den Prozess des Fragens nach dem Aufenthaltsort des Korrespondenzknotens einleitet (303), indem er eine Zuordnungsanfrageanforderung an das ILR in der Zuordnungsweiterleitungsebene überträgt;
das ILR nach Empfangen der Zuordnungsanfrageanforderung nach der RID fragt, die der AID des Korrespondenzknotens entspricht, und die RID des ASN zurückgibt, bei dem sich das Endgerät befindet;
das Verfahren ferner umfasst, dass: der ASN, bei dem sich das Endgerät befindet, nach Empfang der RID, die der AID des Korrespondenzknotens entspricht, AID-RID-Zuordnungsinformationen des Korrespondenzknotens lokal speichert; dann, wenn er die Datenbotschaft empfängt, die von dem Endgerät an den Korrespondenzknoten übertragen wird, die RID, die der AID des Korrespondenzknotens entspricht, in der Datenbotschaft in Übereinstimmung mit gespeicherten Zuordnungsinformationen einschließt und die Datenbotschaft durch die verallgemeinerte Weiterleitungsebene an den ASN weiterleitet, bei dem sich der Korrespondenzknoten befindet.

4. Verfahren nach Anspruch 3, wobei
wenn der ASN, bei dem sich das Endgerät befindet, die RID, die der AID des Korrespondenzknotens entspricht, lokal nicht herausfindet, der ASN, bei dem sich das Endgerät befindet, die Datenbotschaft an eine Packet Transfer Function PTF in der Zuordnungsweiterleitungsebene überträgt; und
die PTF nach Empfang der Datenbotschaft bei dem ILR nach der RID fragt, die der AID des Korrespondenzknotens entspricht, die RID in die Datenbotschaft einschließt und dann die Datenbotschaft durch die verallgemeinerte Weiterleitungsebene an den ASN weiterleitet, bei dem sich der Korrespondenzknoten befindet.

5. Verfahren nach Anspruch 4, wobei
in dem Identification Identifier and Location Separation Network die AID des Korrespondenzknotens Heimatinformationen enthält;
der ASN, bei dem sich das Endgerät befindet, die Zuordnungsanfrageanforderung an ein aktuelles ILR des Endgeräts überträgt, und wenn sich das aktuelle ILR des Endgeräts von einem Heimat-ILR des Korrespondenzknotens unterscheidet, das aktuelle ILR des Endgeräts die Zuordnungsanfrageanforderung an das Heimat-ILR des Korrespondenzknotens in Übereinstimmung mit den Heimatinformationen lenkt, die in der AID des Korrespondenzknotens enthalten sind, und das Heimat-ILR des Korrespondenzknotens nach der RID fragt, die der AID des Korrespondenzknotens entspricht;
der ASN, bei dem sich das Endgerät befindet, die Datenbotschaft an die aktuelle PTF des Endgeräts überträgt, und wenn sich die aktuelle PTF des Endgeräts von der Heimat-PTF des Korrespondenzknotens unterscheidet, die aktuelle PTF des Endgeräts die Datenbotschaft an die Heimat-PTF des Korrespondenzknotens in Übereinstimmung mit den Heimatinformationen lenkt, die in der AID des Korrespondenzknotens enthalten sind, und die Heimat-PTF des Korrespondenzknotens bei dem Heimat-ILR des Korrespondenzknotens nach der RID fragt, die der AID des Korrespondenzknotens entspricht.

6. System zum Weiterleiten einer Datenbotschaft in einem Prozess zum Einleiten einer Kommunikation, der auf ein Identification Identifier and Location Separation Network angewendet wird, wobei das System einen Zugangsdienstknoten ASN und ein Backbone-Netzwerk umfasst, wobei das Backbone-Netzwerk in eine Zuordnungsweiterleitungsebene und eine verallgemeinerte Weiterleitungsebene unterteilt ist,
wobei der ASN ausgestaltet ist, um: nach Empfangen einer ersten Datenbotschaft, die eine Zugangskennung AID eines Korrespondenzknotens enthält, die von einem Endgerät übertragen wurde, nach AID-RID-Zuordnungsinformationen in einem lokalen Cache in Übereinstimmung mit der AID des Korrespondenzknotens zu fragen, dann, wenn keine Routing Location Identifier RID, die der AID des Korrespondenzknotens entspricht, gefunden wird, eine RID, welcher eine AID des Endgeräts entspricht, als eine Quellenadresse zu behandeln und eine Routing-Kennung RIDi eines Identity Location Registers ILR in einer Zuordnungsweiterleitungsebene, die mit dem ASN verbunden ist, als eine Zieladresse zu behandeln, wobei beide Adressen in einen neu hinzugefügten Botschaftsheader eingeschlossen werden, um die erste Datenbotschaft an das Backbone-Netzwerk weiterzuleiten und um einen Prozess zum Fragen nach dem Aufenthaltsort des Korrespondenzknotens an dem Backbone-Netzwerk einzuleiten; und um, wenn er eine zweite Datenbotschaft empfängt, die an das Endgerät übertragen wird, eine RID in der zweiten Datenbotschaft aus der zweiten Datenbotschaft zu entfernen und die zweite Datenbotschaft an das Endgerät zu übertragen;
wobei die Zuordnungsweiterleitungsebene ausgestaltet ist, um: nach Empfangen der ersten Datenbotschaft nach der RID zu fragen, die der AID des Korrespondenzknotens entspricht, und um die RID, die der AID des Korrespondenzknotens entspricht, in den Botschaftsheader der ersten Datenbotschaft einzuschließen, um die RIDi in dem neu hinzugefügten Botschaftsheader durch die RID zu ersetzen, die der AID des Korrespondenzknotens entspricht, und dann die erste Datenbotschaft durch die verallgemeinerte Weiterleitungsebene an den ASN weiterzuleiten, bei dem sich der Korrespondenzknoten befindet;
wobei dann, wenn ein Aufenthaltsort des Endgeräts verändert wird, durch den ASN, bei dem sich das Endgerät befindet, eine Prozedur des Registrierens und Aktualisierens von Zuordnungsinformationen an der Zuordnungsweiterleitungsebene eingeleitet wird; der ASN, bei dem sich das Endgerät befindet, nach Zuteilen einer neuen RID für das Endgerät eine Aktualisierungsbotschaft, die die AID des Endgeräts und die neue RID des Endgeräts trägt, an das ILR einleitet; wobei das ILR nach Empfang der Aktualisierungsbotschaft einen AID-RID-Eintrag aktualisiert, dem das Endgerät entspricht.

7. System nach Anspruch 6, wobei
die Zuordnungsweiterleitungsebene ausgestaltet ist, um AID-RID-Zuordnungsinformationen des Korrespondenzknotens zu speichern, um die Registrierung und die Frage nach dem Aufenthaltsort des Korrespondenzknotens zu erledigen, um eine Datenbotschaft zu lenken und weiterzuleiten, welche die AID als eine Zieladresse behandelt;
die verallgemeinerte Weiterleitungsebene ausgestaltet ist, um eine Datenbotschaft, die die RID als die Zieladresse behandelt, in Übereinstimmung mit der RID in der Datenbotschaft, welche die RID als die Zieladresse behandelt, zu lenken und weiterzuleiten.

8. System nach Anspruch 6, wobei
die Zuordnungsweiterleitungsebene das ILR umfasst, welches ausgestaltet ist, um AID-RID-Zuordnungsinformationen des Korrespondenzknotens zu speichern, zu aktualisieren oder zu löschen; und um nach Empfangen der Aufenthaltsortsanfrageanforderung, die von dem Endgerät eingeleitet wurde, die RID, die der AID des Korrespondenzknotens in der Anforderung entspricht, an eine anfragende Partei zurückzugeben.

9. System nach Anspruch 6, wobei
die Zuordnungsweiterleitungsebene ferner eine Packet Transfer Function PTF umfasst, die ausgestaltet ist, um: nach Empfangen der ersten Datenbotschaft, die von dem ASN übertragen wurde, bei dem ILR in der Heimatdomäne des Korrespondenzknotens gemäß der AID des Korrespondenzknotens in der ersten Datenbotschaft nach der RID zu fragen, die der AID des Korrespondenzknotens entspricht, und um die RID, die der AID des Korrespondenzknotens entspricht, als die Zieladresse der ersten Datenbotschaft zu behandeln, und um die erste Datenbotschaft über die verallgemeinerte Weiterleitungsebene an den ASN zu übertragen, bei dem sich der Korrespondenzknoten befindet.

10. System nach Anspruch 8 oder 9, wobei
die Zuordnungsweiterleitungsebene eine Vielzahl von Domänen umfasst, und Identity Location Registers/Packet Transfer Functions, ILRs/PTFs in der Zuordnungsweiterleitungsebene in Knoten innerhalb einer Domäne und Verbindungsknoten zwischen Domänen aufgeteilt sind, wobei
jeder Verbindungsknoten zwischen Domänen ausgestaltet ist, um Routinginformationen von allen Domänen zu erstellen, zu speichern und zu pflegen, und um eine Interdomänen-Routingtabelle zu bilden; wobei Inhalte, die in der Interdomänen-Routingtabelle gespeichert sind, Routinginformationen von jeder Domäne sind;
jeder Knoten innerhalb einer Domäne ausgestaltet ist, um Routinginformationen von allen Endgeräten in der gegenwärtigen Domäne zu erstellen, zu speichern und zu pflegen, und um eine Domänen-Routingtabelle zu bilden; wobei Inhalte, die in der Domänen-Routingtabelle gespeichert sind, Kennungsinformationen von jedem Knoten in der gegenwärtigen Domäne sind.

11. System nach Anspruch 10, wobei
das Unterteilen der Domänen in der Zuordnungsweiterleitungsebene durch eine Betriebspolitik entschieden wird, und das Netzwerk in eine Vielzahl von Domänen in Übereinstimmung mit Betreibernetzwerken, Unternehmensnetzwerken oder Ländern und Regionen unterteilt wird.

## Revendications

1. Procédé d'acheminement d'un message de données dans un processus de déclenchement de communication, qui est appliqué à un réseau d'identifiant d'identification et de séparation d'emplacement, le procédé comprenant :
un noeud de service d'accès, ASN, où est situé un terminal, recevant (302) le message de données contenant un identifiant d'accès, AID, d'un noeud correspondant qui est transmis par le terminal, demandant des informations de mappage AID-RID dans une mémoire cache locale selon l'AID du noeud correspondant, si un identifiant d'emplacement de routage, RID, correspondant à l'AID du noeud correspondant n'est pas trouvé, alors l'ASN où est situé le terminal traitant un RID auquel correspond un AID du terminal en tant qu'adresse source et traitant un identifiant de routage RIDi d'un registre d'emplacement d'identité, ILR, dans un plan d'acheminement de mappage connecté à l'ASN où est situé le terminal en tant qu'adresse de destination, dans lequel les deux adresses sont encapsulées dans un en-tête de message nouvellement ajouté, l'ASN où est situé le terminal acheminant le message de données au plan d'acheminement de mappage et déclenchant un processus de demande d'emplacement du noeud correspondant auprès du plan d'acheminement de mappage et dans le même temps transmettant le message de données au plan d'acheminement de mappage (303) ;
après réception (304a) du message de données, le plan d'acheminement de mappage demandant (304) le RID correspondant à l'AID du noeud correspondant, encapsulant (304a) le RID correspondant à l'AID du noeud correspondant dans l'en-tête de message du message de données, remplaçant le RIDi dans l'en-tête de message nouvellement ajouté par le RID correspondant à l'AID du noeud correspondant puis acheminant (304a à 306) le message de données à un ASN où est situé le noeud correspondant par le biais d'un plan d'acheminement généralisé ; et
après réception (307) du message de données, l'ASN où est situé le noeud correspondant enlevant (307) le RID du message de données puis transmettant (307) le message de données au noeud correspondant ;
dans lequel, lorsqu'un emplacement du terminal est changé, une procédure d'enregistrement et de mise à jour d'informations de mappage est déclenchée auprès du plan d'acheminement de mappage par le biais de l'ASN où est situé le terminal ; après allocation d'un nouveau RID au terminal, l'ASN où est situé le terminal déclenche un message de mise à jour portant l'AID du terminal et le nouveau RID du terminal vers l'ILR ; après réception du message de mise à jour, l'ILR met à jour une entrée AID-RID à laquelle correspond le terminal ;
dans lequel un réseau fédérateur est divisé en le plan d'acheminement de mappage et le plan d'acheminement généralisé.

2. Procédé selon la revendication 1, dans lequel
le plan d'acheminement de mappage est configuré pour stocker des informations de mappage AID-RID du noeud correspondant, gérer l'enregistrement et demander l'emplacement de noeud correspondant, router et acheminer un message de données qui traite l'AID en tant qu'adresse de destination ;
le plan d'acheminement généralisé est configuré pour router et acheminer un message de données qui traite le RID en tant qu'adresse de destination selon le RID dans le message de données traite le RID en tant qu'adresse de destination.

3. Procédé selon la revendication 1, dans lequel
l'ASN où est situé le terminal déclenchant (303) le processus de demande d'emplacement du noeud correspondant en transmettant une requête de demande de mappage à l'ILR dans le plan d'acheminement de mappage ; après réception de la requête de demande de mappage, l'ILR demandant le RID correspondant à l'AID du noeud correspondant, et renvoyant le RID à l'ASN où est situé le terminal ;
le procédé comprend en outre : après réception du RID correspondant à l'AID du noeud correspondant, l'ASN où est situé le terminal stockant des informations de mappage AID-RID du noeud correspondant localement ; ensuite, lors de la réception du message de données transmis par le terminal au noeud correspondant, encapsulant le RID correspondant à l'AID du noeud correspondant dans le message de données selon les informations de mappage stockées, et acheminant le message de données à l'ASN où est situé le noeud correspondant par le biais du plan d'acheminement généralisé.

4. Procédé selon la revendication 3, dans lequel
lorsque l'ASN où est situé le terminal ne recherche pas le RID correspondant à l'AID du noeud correspondant localement, l'ASN où est situé le terminal transmettant le message de données à une fonction de transfert de paquet, PTF, dans le plan d'acheminement de mappage ; et
après réception du message de données, la PTF demandant le RID correspondant à l'AID du noeud correspondant auprès de l'ILR, encapsulant le RID dans le message de données, puis acheminant le message de données à l'ASN où est situé le noeud correspondant par le biais du plan d'acheminement généralisé.

5. Procédé selon la revendication 4, dans lequel
dans le réseau d'identifiant d'identification et de séparation d'emplacement, l'AID du noeud correspondant inclut des informations de domicile ;
l'ASN où est situé le terminal transmettant la requête de demande de mappage à un ILR actuel du terminal, et si l'ILR actuel du terminal est différent d'un ILR de domicile du noeud correspondant, l'ILR actuel du terminal routant la requête de demande de mappage vers l'ILR de domicile du noeud correspondant selon les informations de domicile incluses dans l'AID du noeud correspondant, et l'ILR de domicile du noeud correspondant demandant le RID correspondant à l'AID du noeud correspondant ;
l'ASN où est situé le terminal transmettant le message de données à la PTF actuelle du terminal, et si la PTF actuelle du terminal est différente de la PTF de domicile du noeud correspondant, la PTF actuelle du terminal routant le message de données à la PTF de domicile du noeud correspondant selon les informations de domicile incluses dans l'AID du noeud correspondant, et la PTF de domicile du noeud correspondant demandant le RID correspondant à l'AID du noeud correspondant auprès de l'ILR de domicile du noeud correspondant.

6. Système d'acheminement d'un message de données dans un processus de déclenchement de communication, qui est appliqué à un réseau d'identifiant d'identification et de séparation d'emplacement, le système comprenant :
un noeud de service d'accès, ASN, et un réseau fédérateur, dans lequel le réseau fédérateur est divisé en un plan d'acheminement de mappage et un plan d'acheminement généralisé,
dans lequel l'ASN est configuré pour : après réception d'un premier message de données incluant un identifiant d'accès, AID, d'un noeud correspondant transmis par un terminal, demander des informations de mappage AID-RID dans une mémoire cache locale selon l'AID du noeud correspondant, si un identifiant d'emplacement de routage, RID, correspondant à l'AID du noeud correspondant n'est pas trouvé, traiter alors un RID auquel correspond un AID du terminal en tant qu'adresse source et traiter un identifiant de routage RIDi d'un registre d'emplacement d'identité, ILR, dans un plan d'acheminement de mappage connecté à l'ASN en tant qu'adresse de destination, dans lequel les deux adresses sont encapsulées dans un en-tête de message nouvellement ajouté, acheminer le premier message de données au réseau fédérateur et déclencher un processus de demande d'un emplacement du noeud correspondant au réseau fédérateur ; et lors de la réception d'un second message de données transmis au terminal, enlever un RID dans le second message de données à partir du second message de données et transmettre le second message de données au terminal ;
le plan d'acheminement de mappage est configuré pour : après réception du premier message de données, demander le RID correspondant à l'AID du noeud correspondant et encapsuler le RID correspondant à l'AID du noeud correspondant dans l'en-tête de message du premier message de données, remplacer le RIDi dans l'en-tête de message nouvellement ajouté par le RID correspondant à l'AID du noeud correspondant puis acheminer le premier message de données à l'ASN où est situé le noeud correspondant par le biais du plan d'acheminement généralisé ;
dans lequel, lorsqu'un emplacement du terminal est changé, une procédure d'enregistrement et de mise à jour d'informations de mappage est déclenchée auprès du plan d'acheminement de mappage par le biais de l'ASN où est situé le terminal ; après allocation d'un nouveau RID au terminal, l'ASN où est situé le terminal déclenche un message de mise à jour portant l'AID du terminal et le nouveau RID du terminal vers l'ILR ; après réception du message de données, l'ILR met à jour une entrée AID-RID à laquelle correspond le terminal.

7. Système selon la revendication 6, dans lequel
le plan d'acheminement de mappage est configuré pour stocker des informations de mappage AID-RID du noeud correspondant, gérer l'enregistrement et demander l'emplacement du noeud correspondant, router et acheminer un message de données qui traite l'AID en tant qu'adresse de destination ;
le plan d'acheminement généralisé est configuré pour router et acheminer un message de données qui traite le RID en tant qu'adresse de destination selon le RID dans le message de données qui traite le RID en tant qu'adresse de destination.

8. Système selon la revendication 6, dans lequel
le plan d'acheminement de mappage comprend l'ILR qui est configuré pour stocker, mettre à jour ou supprimer des informations de mappage AID-RID du noeud correspondant ; et après réception de la requête de demande d'emplacement déclenchée par le terminal, renvoyer le RID correspondant à l'AID du noeud correspondant dans la requête à un tiers demandeur.

9. Système selon la revendication 6, dans lequel
le plan d'acheminement de mappage comprend en outre une fonction de transfert de paquet, PTF, qui est configurée pour : après réception du premier message de données transmis par l'ASN, demander le RID correspondant à l'AID du noeud correspondant auprès de l'ILR du domaine de domicile du noeud correspondant selon l'AID du noeud correspondant dans le premier message de données, et traiter le RID correspondant à l'AID du noeud correspondant en tant qu'adresse de destination du premier message de données, et transmettre le premier message de données à l'ASN où est situé le noeud correspondant via le plan d'acheminement généralisé.

10. Système selon la revendication 8 ou 9, dans lequel
le plan d'acheminement de mappage comprend une pluralité de domaines, et des registres d'emplacement d'identité/des fonctions de transfert de paquet, ILR/PTF, dans le plan d'acheminement de mappage sont séparés en noeuds intradomaine et noeuds d'interconnexion interdomaine, dans lequel chaque noeud d'interconnexion interdomaine est configuré pour établir, stocker et maintenir des informations de routage de tous les domaines, et former une table de routage interdomaine ; dans lequel, des contenus stockés dans la table de routage interdomaine sont des informations de routage de chaque domaine ;
chaque noeud intradomaine est configuré pour établir, stocker et maintenir des informations de routage de tous les terminaux dans le présent domaine, et former une table de routage intradomaine ; dans lequel, des contenus stockés dans la table de routage intradomaine sont des informations d'identifiant de chaque noeud dans le présent domaine.

11. Système selon la revendication 10, dans lequel
la division des domaines dans le plan d'acheminement de mappage est décidée par une politique de fonctionnement, et le réseau est divisé en une pluralité de domaines selon des réseaux d'opérateur, des réseaux d'entreprise ou des pays et des régions.
